# EUROPEAN PATENT APPLICATION

(11) **EP 4 513 903 A1**
(43) Date of publication of application: **26.02.2025**
(21) Application number: 22949139.4
(22) Date of filing: 13.12.2022
(51) Int. Cl.: H04W 4/02

(54) **SIGNAL TRANSMISSION METHOD, DEVICE AND SYSTEM**

(30) Priority: 01.07.2022 CN 202210768897
(71) Applicant: Huawei Technologies Co., Ltd., Shenzhen, Guangdong 518129 (CN)
(72) Inventor: MA, Chao, Shenzhen, Guangdong 518129 (CN); YU, Qian, Shenzhen, Guangdong 518129 (CN); HU, Shichang, Shenzhen, Guangdong 518129 (CN)
(74) Representative: Goddar, Heinz J.
(86) International application number: PCT/CN2022/138745
(87) International publication number: WO 2024/001063

(57) **Abstract**

This application provides a signal transmission method, apparatus, and system. The method includes: generating an ultra-wideband signal, where the ultra-wideband signal includes a channel impulse response training sequence CTS field, and the CTS field is obtained by separately spreading at least one first preamble symbol based on a pseudo-random sequence; and sending the ultra-wideband signal, where the CTS field is used to determine a channel impulse response. This application can effectively improve ranging and positioning efficiency while implementing secure high-precision ranging and positioning.

## Description

This application claims priority to Chinese Patent Application No. 202210768897.7, filed with the China National Intellectual Property Administration on July 1, 2022 and entitled "SIGNAL TRANSMISSION METHOD, APPARATUS, AND SYSTEM", which is incorporated herein by reference in its entirety.

### TECHNICAL FIELD

This application relates to the communication field, and in particular, to a signal transmission method, apparatus, and system.

### BACKGROUND

An ultra-wideband (Ultra-wideband, UWB) wireless technology is a wireless carrier communication technology that uses a high-frequency bandwidth. The ultra-wideband wireless technology uses a narrow time domain signal to transmit data, and a resolution of the signal is high. Therefore, the ultra-wideband wireless technology has a high multipath parsing capability, and can ensure high ranging precision in a complex multipath environment. When ranging is performed based on an ultra-wideband signal, security of the ultra-wideband signal during transmission needs to be ensured, to implement secure high-precision ranging and positioning.

At present, in the ultra-wideband wireless technology, a high rate pulse repetition frequency (High rate pulse repetition frequency, HPR) UWB protocol under the institute of electrical and electronics engineers (Institute of Electrical and Electronics Engineers, IEEE) 802.15.4a/z standard is usually used for ranging and positioning. A random sequence is added to a signal format defined in the HPR UWB protocol for security protection of an ultra-wideband signal.

However, the random sequence has a poor correlation, and is easily interfered with by an external signal, resulting in a poor security protection capability of the ultra-wideband signal. When performing ranging and positioning based on a received ultra-wideband signal, a receive end may obtain incorrect time and distance information, affecting ranging and positioning accuracy.

### SUMMARY

This application provides a signal transmission method, apparatus, and system, to effectively improve ranging and positioning efficiency while implementing secure high-precision ranging and positioning.

According to a first aspect, this application provides a signal transmission method. The method includes: generating an ultra-wideband signal, where the ultra-wideband signal includes a channel impulse response training sequence (Channel Impulse Response training sequence, CTS) field, and the CTS field is obtained by spreading at least one first preamble symbol (preamble symbol) based on a pseudo-random sequence; and sending the ultra-wideband signal, where the CTS field is used to determine a channel impulse response.

A length of the pseudo-random sequence is related to a quantity of first preamble symbols. In this embodiment of this application, a quantity of bits of the pseudo-random sequence is the same as the quantity of first preamble symbols. The at least one first preamble symbol may be multiplied by the pseudo-random sequence, to obtain the CTS field.

When a transmit end determines the pseudo-random sequence, in an implementation, the transmit end may directly determine a first pseudo-random sequence with a fixed length, and then tailor or repeat some values of the first pseudo-random sequence based on the quantity of first preamble symbols, to obtain the pseudo-random sequence. In another implementation, the transmit end may determine a pseudo-random sequence with a corresponding length based on the quantity of first preamble symbols. A manner of determining the pseudo-random sequence is not limited in this application.

The first preamble symbol may include a first preamble code or may be generated by spreading a first preamble code. The first preamble code is a sequence having a good correlation characteristic, for example, may be a binary (binary) sequence or a ternary (ternary) sequence. The first preamble code is not limited in embodiments of this application. A sequence having a good correlation characteristic is not easily interfered with by an external signal, so that when a receive end subsequently determines the channel impulse response based on the CTS field, high precision of the channel impulse response can be maintained, thereby maintaining high-precision ranging of an ultra-wideband system. In addition, when the first preamble symbol is generated by spreading the first preamble code, the first preamble symbol may be unpredictable, thereby improving an anti-interference capability and security of the ultra-wideband signal.

In the method, the pseudo-random sequence is equivalent to an encrypted spreading code, and the at least one first preamble symbol is separately spread based on the encrypted spreading code, so that the CTS field is not easily interfered with by an external signal and is unpredictable without damaging correlation of the first preamble symbol. This ensures a security protection capability of the ultra-wideband signal, thereby implementing secure high-precision ranging and positioning. In addition, encryption is combined with the at least one first preamble symbol, and no sequence used for encryption needs to be newly added, so that there is no need to additionally prolong an air transmission time of the ultra-wideband signal, thereby effectively improving ranging and positioning efficiency.

In a possible implementation, the pseudo-random sequence is determined according to a symmetric encryption algorithm. The symmetric encryption algorithm includes but is not limited to an advanced encryption standard (Advanced Encryption Standard, AES) encryption algorithm.

In a possible implementation, the ultra-wideband signal further includes a synchronization SYNC field, the SYNC field includes at least one second preamble symbol, and the SYNC field is used to perform synchronization on the ultra-wideband signal.

The second preamble symbol may include a second preamble code or may be generated by spreading a second preamble code. The second preamble code may be a sequence having a good correlation characteristic, for example, may be a binary sequence or a ternary sequence. A form of the second preamble code is not limited in embodiments of this application.

In a possible implementation, there are a plurality of first preamble symbols, a plurality of CTS symbols are obtained by spreading the plurality of first preamble symbols, the plurality of CTS symbols form a plurality of CTS segments, and there is a gap between any two CTS segments. In this way, when the ultra-wideband signal is sent through an impulse signal, a duty cycle of the impulse signal may be reduced, transmit power of the ultra-wideband signal is increased while a use specification of an ultra-wideband frequency band is met, and an attenuation degree of the ultra-wideband signal in a transmission process is reduced, to expand a coverage area of the ultra-wideband signal.

In a possible implementation, the method further includes: sending a narrowband signal, where the narrowband signal is used to perform synchronization on the ultra-wideband signal.

According to a second aspect, this application provides a signal transmission method. The method includes: receiving an ultra-wideband signal, where the ultra-wideband signal includes a channel impulse response training sequence CTS field, and the CTS field is obtained by separately spreading at least one first preamble symbol based on a pseudo-random sequence; despreading the CTS field based on the pseudo-random sequence, to obtain the at least one first preamble symbol; and determining a channel impulse response based on the at least one first preamble symbol.

In a possible implementation, the pseudo-random sequence is determined according to a symmetric encryption algorithm. A pseudo-random sequence determined by a receive end is the same as a pseudo-random sequence determined by a transmit end. The pseudo-random sequence is determined by the receive end according to the symmetric encryption algorithm, that is, the receive end and the transmit end determine the pseudo-random sequence by using a same key.

In a possible implementation, the ultra-wideband signal further includes a synchronization SYNC field, and the SYNC field includes at least one second preamble symbol; and the method further includes: determining first time-frequency synchronization information based on the SYNC field; and performing synchronization on the ultra-wideband signal based on the first time-frequency synchronization information.

The first time-frequency synchronization information or second time-frequency synchronization information may include a sample clock offset (sample clock offset, SCO) and/or a carrier frequency offset (Carrier Frequency Offset, CFO).

The receive end may implement high-precision synchronization on the CTS field of the ultra-wideband signal based on the first time-frequency synchronization information. When an ultra-wideband system determines the channel impulse response based on the CTS field, accuracy of the channel impulse response is closely related to precision of synchronization on the CTS field. The receive end can implement high-precision synchronization on the CTS field based on the SYNC field, to ensure accuracy of a subsequently determined channel impulse response, so as to ensure good ranging performance when ranging is performed based on the channel impulse response.

In a possible implementation, the CTS field includes a plurality of CTS segments, the CTS segment includes at least one CTS symbol, the first preamble symbol is obtained by despreading the CTS symbol, and there is a gap between any two CTS segments.

In a possible implementation, the method further includes: determining second time-frequency synchronization information based on a received narrowband signal; and performing synchronization on the ultra-wideband signal based on the second time-frequency synchronization information.

For a narrow band assisted ultra-wideband receive end, because an ultra-wideband system has a high bandwidth, a device needs to operate at a high sampling rate, that is, the ultra-wideband system needs to operate at a high frequency. Therefore, compared with a narrowband system, the ultra-wideband system has a large chip area, high operating power consumption, and high operating costs. In this embodiment of this application, the second time-frequency synchronization information is determined by a narrowband system at the receive end, and the narrowband system may partially perform a synchronization process based on the narrowband signal. This effectively shortens an air transmission time of the ultra-wideband signal and effectively reduces complexity of the ultra-wideband system, thereby reducing a chip area, operating power consumption, and operating costs of the ultra-wideband system, and improving ranging efficiency.

According to a third aspect, this application provides a signal transmission apparatus. The apparatus includes: a processing module, configured to generate an ultra-wideband signal, where the ultra-wideband signal includes a channel impulse response training sequence CTS field, and the CTS field is obtained by separately spreading at least one first preamble symbol based on a pseudo-random sequence; and a transceiver module, configured to send the ultra-wideband signal, where the CTS field is used to determine a channel impulse response.

In a possible implementation, the pseudo-random sequence is determined according to a symmetric encryption algorithm.

In a possible implementation, the ultra-wideband signal further includes a synchronization SYNC field, the SYNC field includes at least one second preamble symbol, and the SYNC field is used to perform synchronization on the ultra-wideband signal.

In a possible implementation, there are a plurality of first preamble symbols, a plurality of CTS symbols are obtained by spreading the plurality of first preamble symbols, the plurality of CTS symbols form a plurality of CTS segments, and there is a gap between any two CTS segments.

In a possible implementation, the transceiver module is further configured to send a narrowband signal, where the narrowband signal is used to perform synchronization on the ultra-wideband signal.

According to a fourth aspect, this application provides a signal transmission apparatus. The apparatus includes: a transceiver module, configured to receive an ultra-wideband signal, where the ultra-wideband signal includes a channel impulse response training sequence CTS field, and the CTS field is obtained by separately spreading at least one first preamble symbol based on a pseudo-random sequence; and a processing module, configured to despread the CTS field based on the pseudo-random sequence, to obtain the at least one first preamble symbol. The processing module is further configured to determine a channel impulse response based on the at least one first preamble symbol.

In a possible implementation, the pseudo-random sequence is determined according to a symmetric encryption algorithm.

In a possible implementation, the ultra-wideband signal further includes a synchronization SYNC field, and the SYNC field includes at least one second preamble symbol; and the processing module is further configured to: determine first time-frequency synchronization information based on the SYNC field; and perform synchronization on the ultra-wideband signal based on the first time-frequency synchronization information.

In a possible implementation, the CTS field includes a plurality of CTS segments, the CTS segment includes at least one CTS symbol, the first preamble symbol is obtained by despreading the CTS symbol, and there is a gap between any two CTS segments.

In a possible implementation, the processing module is further configured to: determine second time-frequency synchronization information based on a received narrowband signal; and perform synchronization on the ultra-wideband signal based on the second time-frequency synchronization information.

According to a fifth aspect, this application provides a signal transmission apparatus. The apparatus includes one or more processors, and a memory, configured to store one or more computer programs or instructions. When the one or more computer programs or instructions are executed by the one or more processors, the one or more processors are enabled to implement the method according to any one of the first aspect.

According to a sixth aspect, this application provides a signal transmission apparatus. The apparatus includes one or more processors, and a memory, configured to store one or more computer programs or instructions. When the one or more computer programs or instructions are executed by the one or more processors, the one or more processors are enabled to implement the method according to any one of the second aspect.

According to a seventh aspect, this application provides a signal transmission apparatus, including a processor, configured to perform the method according to any one of the first aspect.

According to an eighth aspect, this application provides a signal transmission apparatus, including a processor, configured to perform the method according to any one of the second aspect.

According to a ninth aspect, this application provides a signal transmission system. The system includes a transmit end and a receive end. The transmit end includes the signal transmission apparatus according to any one of the third aspect, the signal transmission apparatus according to any one of the fifth aspect, or the signal transmission apparatus according to any one of the seventh aspect; and the receive end includes the signal transmission apparatus according to any one of the fourth aspect, the signal transmission apparatus according to any one of the sixth aspect, or the signal transmission apparatus according to any one of the eighth aspect.

According to a tenth aspect, this application provides a computer-readable storage medium, including a computer program or instructions. When the computer program or the instructions are executed on a computer, the computer is enabled to perform the method according to any one of the first aspect and the second aspect.

### BRIEF DESCRIPTION OF DRAWINGS

FIG. 1 is a schematic flowchart of a signal transmission method according to an embodiment of this application;
FIG. 2 is a schematic flowchart of another signal transmission method according to an embodiment of this application;
FIG. 3 is a schematic flowchart of still another signal transmission method according to an embodiment of this application;
FIG. 4 is a diagram of a format of an ultra-wideband signal according to an embodiment of this application;
FIG. 5 is a diagram of a structure of a SYNC field according to an embodiment of this application;
FIG. 6 is a diagram of a structure of a CTS field according to an embodiment of this application;
FIG. 7 is a diagram of a structure of a CTS segment according to an embodiment of this application;
FIG. 8 is a block diagram of a signal transmission apparatus according to an embodiment of this application;
FIG. 9 is a diagram of a structure of an electronic device according to an embodiment of this application; and
FIG. 10 is a diagram of a structure of a signal transmission apparatus according to an embodiment of this application.

### DESCRIPTION OF EMBODIMENTS

To make objectives, technical solutions, and advantages of this application clearer, the following clearly and completely describes the technical solutions in this application with reference to accompanying drawings in this application. It is clear that the described embodiments are merely a part rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, terms such as "first" and "second" are merely intended for distinguishing and description, and shall not be understood as indicating or implying relative importance, or indicating or implying a sequence. In addition, terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

It should be understood that, in this application, "at least one" refers to one or more, and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

An ultra-wideband wireless technology uses a narrow time domain signal to transmit data, for example, in an impulse radio ultra-wideband (Impulse Radio UWB, IR-UWB), uses a nanosecond-level narrow impulse signal to transmit data, and a resolution of the signal is high. Therefore, the ultra-wideband wireless technology has a high multipath parsing capability, and can ensure centimeter-level ranging precision in a complex multipath environment (for example, an indoor environment). When ranging is performed based on an ultra-wideband signal, security protection of the ultra-wideband signal is a basis of secure ranging and positioning.

At present, in the ultra-wideband technology, a commonly used ranging protocol is the HPR UWB protocol under the IEEE 802.15.4a/z standard. The HPR UWB protocol defines a plurality of signal formats, and a random sequence is added to the plurality of signal formats for security protection of an ultra-wideband signal. The random sequence may be, for example, a scrambled timestamp sequence (Scrambled timestamp sequence, STS). However, the random sequence has a poor correlation, and is easily interfered with by an external signal, resulting in a poor security protection capability of the ultra-wideband signal. When a receive end performs ranging and positioning based on a received ultra-wideband signal, there is a high probability that an error peak value is present in obtained channel impulse response values, and then incorrect time distance information is obtained through calculation, affecting ranging and positioning accuracy. Consequently, security of ranging and positioning is low.

Embodiments of this application provide a signal transmission method, to ensure a security protection capability of an ultra-wideband signal, thereby maintaining high ranging and positioning precision of an ultra-wideband system. The method may be applied to a signal transmission system, and the signal transmission system includes a transmit end and a receive end. The signal transmission system may include but is not limited to an ultra-wideband signal transmission system and a narrow band (Narrow band, NB) assisted ultra-wideband signal transmission system. Correspondingly, both the transmit end and the receive end include an ultra-wideband system, or both the transmit end and the receive end include an ultra-wideband system and a narrowband system.

Currently, a signal in the HPR UWB protocol used in the ultra-wideband technology supports data transmission and ranging functions. In this way, because data transmission efficiency of the ultra-wideband system is low, an air transmission time of the signal is long. In addition, the ultra-wideband system needs many functional modules to implement data transmission, ranging, and the like, for example, needs a plurality of functional modules for time-frequency synchronization, channel impulse response estimation, scrambled timestamp sequence (Scrambled timestamp sequence, STS) detection, data monitoring, forward error correction (Forward Error Correction, FEC) decoding, and the like. Consequently, both operating power consumption and operating costs of the ultra-wideband system are high, affecting ranging efficiency. The narrowband system uses a carrier signal with a narrow bandwidth to transmit data, and has advantages such as low operating power consumption and low operating costs. Assisting an ultra-wideband with a narrowband can reduce operating power consumption and operating costs of the ultra-wideband system. For example, the narrowband system may include a wireless fidelity (wireless fidelity, Wi-Fi) system, Bluetooth, a ZigBee (ZigBee) system, and the like.

It should be noted that, in embodiments of this application, a device configured to send a signal is referred to as a transmit end, and a device configured to receive a signal is referred to as a receive end. The transmit end may alternatively receive a signal, and the receive end may alternatively send a signal. A function of the device is not limited in embodiments of this application.

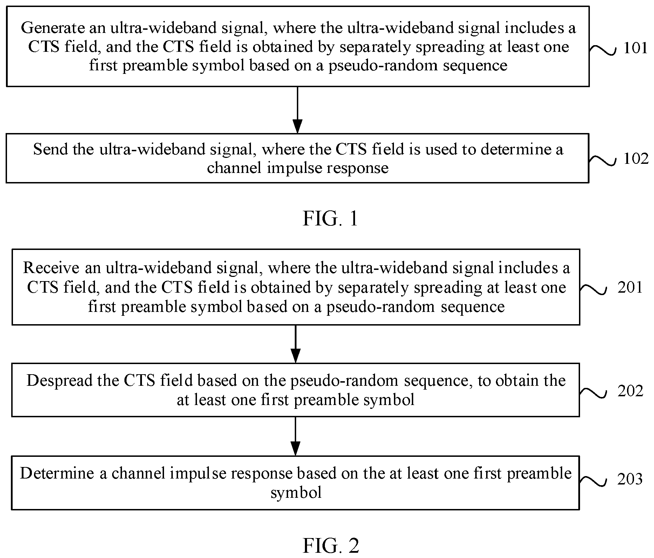

FIG. 1 is a schematic flowchart of a signal transmission method according to an embodiment of this application. The method may be applied to a transmit end in a signal transmission system. The transmit end includes an ultra-wideband system. The method may include the following procedures.

101: Generate an ultra-wideband signal, where the ultra-wideband signal includes a CTS field, and the CTS field is obtained by separately spreading at least one first preamble symbol based on a pseudo-random sequence.

When there are a plurality of first preamble symbols (preamble symbols), the plurality of first preamble symbols may include a same first preamble symbol, or may not include a same first preamble symbol.

Optionally, the ultra-wideband signal may further include a synchronization (Synchronization, SYNC) field, the SYNC field includes at least one second preamble symbol, and the SYNC field is used to perform synchronization on the ultra-wideband signal. There is a gap (gap) between the SYNC field and a start bit of the CTS field. A time length of the gap may be configured in a customized manner. A specific value of the time length of the gap is not limited in embodiments of this application.

102: Send the ultra-wideband signal, where the CTS field is used to determine a channel impulse response.

The ultra-wideband system of the transmit end sends the ultra-wideband signal to a receive end. The ultra-wideband signal is transmitted to the receive end in a form of a narrow time domain signal (for example, a form of a narrow impulse). The ultra-wideband signal may include a physical layer protocol data unit (Physical protocol data unit, PPDU).

Optionally, the signal transmission system may be a narrow band (Narrow band, NB) assisted ultra-wideband signal transmission system. Correspondingly, the transmit end may further include a narrowband system. In this case, before the processes 101 and 102 are performed, the transmit end may further send a narrowband signal to the receive end, where the narrowband signal is used to perform synchronization on the ultra-wideband signal.

In conclusion, according to the signal transmission method provided in this embodiment of this application, the ultra-wideband signal is generated, the ultra-wideband signal includes the CTS field, the CTS field is obtained by separately spreading the at least one first preamble symbol based on the pseudo-random sequence, then the ultra-wideband signal is sent, and the CTS field in the ultra-wideband signal is used to determine the channel impulse response, thereby implementing ranging. The pseudo-random sequence is equivalent to an encrypted spreading code, and the at least one first preamble symbol is separately spread based on the encrypted spreading code, so that the CTS field is not easily interfered with by an external signal and is unpredictable without damaging correlation of the first preamble symbol. This ensures a security protection capability of the ultra-wideband signal, thereby implementing secure high-precision ranging and positioning. In addition, encryption is combined with the at least one first preamble symbol, and no sequence used for encryption needs to be newly added, so that there is no need to additionally prolong an air transmission time of the ultra-wideband signal, thereby effectively improving ranging and positioning efficiency.

FIG. 2 is a schematic flowchart of another signal transmission method according to an embodiment of this application. The method is applied to a receive end in a signal transmission system. The receive end includes an ultra-wideband system. The method may include the following procedures.

201: Receive an ultra-wideband signal, where the ultra-wideband signal includes a CTS field, and the CTS field is obtained by separately spreading at least one first preamble symbol based on a pseudo-random sequence.

202: Despread the CTS field based on the pseudo-random sequence, to obtain the at least one first preamble symbol.

When the ultra-wideband signal further includes a SYNC field, the receive end may first perform synchronization on the CTS field of the ultra-wideband signal based on the SYNC field, and then despread the CTS field.

When the receive end further receives a narrowband signal before the process 201, the receive end may first perform synchronization on the CTS field of the ultra-wideband signal based on the narrowband signal, and then despread the CTS field.

For example, if the receive end fails to receive the narrowband signal and the ultra-wideband signal includes the SYNC field, the receive end determines first time-frequency synchronization information based on the SYNC field, and then performs synchronization on the CTS field based on the first time-frequency synchronization information. If the receive end receives the narrowband signal and the ultra-wideband signal does not include the SYNC field, the receive end determines first time-frequency synchronization information based on the narrowband signal, and then performs synchronization on the CTS field based on the first time-frequency synchronization information. If the receive end receives the narrowband signal and the ultra-wideband signal includes the SYNC field, the receive end determines first time-frequency synchronization information based on the narrowband signal, determines second time-frequency synchronization information based on the first time-frequency synchronization information and the SYNC field, and then performs synchronization on the CTS field based on the second time-frequency synchronization information. If the receive end fails to receive the narrowband signal and the ultra-wideband signal does not include the SYNC field, the receive end despreads the CTS field directly based on the pseudo-random sequence.

The first time-frequency synchronization information or the second time-frequency synchronization information may include an SCO and/or a CFO.

203: Determine a channel impulse response based on the at least one first preamble symbol.

The receive end may determine the channel impulse response based on the CTS field, to perform first-path monitoring, thereby implementing ranging.

In conclusion, according to the signal transmission method provided in this embodiment of this application, the ultra-wideband signal is received, the ultra-wideband signal includes the CTS field, the CTS field is obtained by separately spreading the at least one first preamble symbol based on the pseudo-random sequence, and the receive end despreads the CTS field based on the pseudo-random sequence, to obtain the at least one first preamble symbol, and then determines the channel impulse response based on the at least one first preamble symbol, thereby implementing ranging. The CTS field is obtained by separately spreading the at least one first preamble symbol based on the pseudo-random sequence, and the pseudo-random sequence is equivalent to an encrypted spreading code. When the CTS field is despread based on the pseudo-random sequence, the pseudo-random sequence is equivalent to an encrypted despreading code. The at least one first preamble symbol is separately spread based on the encrypted spreading code, and the CTS field is despread based on the encrypted despreading code, so that the CTS field is not easily interfered with by an external signal and is unpredictable without damaging correlation of the first preamble symbol. This ensures a security protection capability of the ultra-wideband signal, thereby implementing secure high-precision ranging and positioning. In addition, encryption is combined with the at least one first preamble symbol, and no sequence used for encryption needs to be newly added, so that there is no need to additionally prolong an air transmission time of the ultra-wideband signal, thereby effectively improving ranging and positioning efficiency.

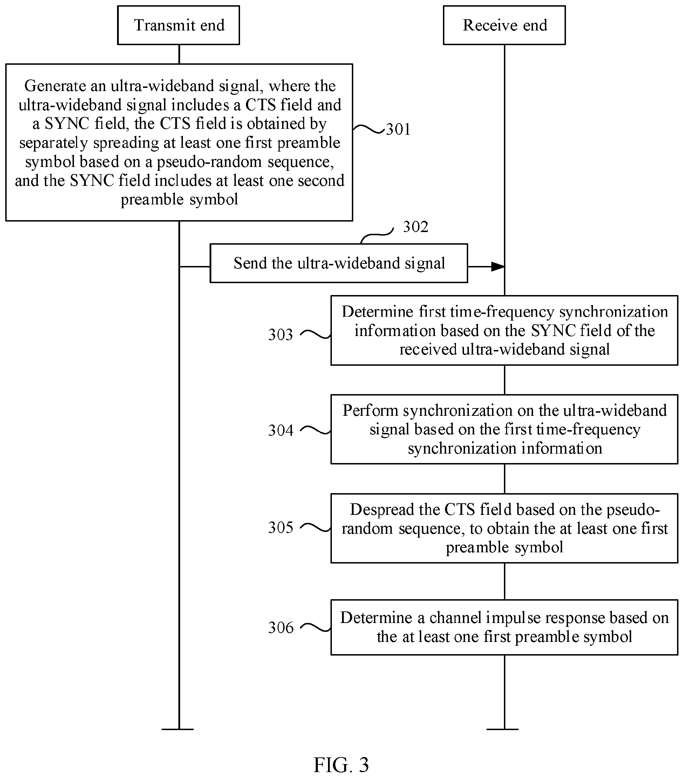

FIG. 3 is a schematic flowchart of still another signal transmission method according to an embodiment of this application. In FIG. 3, an example in which an ultra-wideband signal includes a CTS field and a SYNC field is used for description. The method is applied to a signal transmission system. The signal transmission system includes a transmit end and a receive end. The transmit end and the receive end each include an ultra-wideband system. The method may include the following procedures.

301: The transmit end generates the ultra-wideband signal, where the ultra-wideband signal includes the CTS field and the SYNC field, the CTS field is obtained by separately spreading at least one first preamble symbol based on a pseudo-random sequence, and the SYNC field includes at least one second preamble symbol.

A length of the pseudo-random sequence is related to a quantity of first preamble symbols. In this embodiment of this application, a quantity of bits of the pseudo-random sequence is the same as the quantity of first preamble symbols. The at least one first preamble symbol may be multiplied by the pseudo-random sequence, to obtain the CTS field. When the quantity of first preamble symbols is 1, the pseudo-random sequence includes one value, and each value in one first preamble symbol is multiplied by the one value in the pseudo-random sequence. When there are a plurality of first preamble symbols, the pseudo-random sequence includes a plurality of values that one-to-one correspond to the plurality of first preamble symbols, and each value in any first preamble symbol is multiplied by one value corresponding to the any first preamble symbol in the pseudo-random sequence.

When the transmit end determines the pseudo-random sequence, in an implementation, the transmit end may directly determine a first pseudo-random sequence with a fixed length, and then tailor or repeat some values of the first pseudo-random sequence based on the quantity of first preamble symbols, to obtain the pseudo-random sequence. In another implementation, the transmit end may determine a pseudo-random sequence with a corresponding length based on the quantity of first preamble symbols. A manner of determining the pseudo-random sequence is not limited in this application.

The pseudo-random sequence is determined by the transmit end according to a symmetric encryption algorithm. The symmetric encryption algorithm includes but is not limited to an AES encryption algorithm.

With reference to the foregoing descriptions, optionally, the transmit end may directly obtain the first pseudo-random sequence or the pseudo-random sequence according to the symmetric encryption algorithm. For example, the transmit end may generate the first pseudo-random sequence or the pseudo-random sequence according to the symmetric encryption algorithm, or may encrypt an original sequence according to the symmetric encryption algorithm to obtain the first pseudo-random sequence or the pseudo-random sequence. The original sequence may be fixed or may be randomly generated.

When the original sequence is fixed, if a quantity of bits of the original sequence is the same as the quantity of first preamble symbols, the pseudo-random sequence is obtained by encrypting the original sequence. If a quantity of bits of the original sequence is different from the quantity of first preamble symbols, the first pseudo-random sequence is obtained by encrypting the original sequence. When the original sequence is randomly generated, in an example, an original sequence with a corresponding length may be generated based on the quantity of first preamble symbols. In this case, the pseudo-random sequence is obtained by encrypting the original sequence. In another example, an original sequence with a fixed length may be generated. In this case, if a quantity of bits of the original sequence with the fixed length is the same as the quantity of first preamble symbols, the pseudo-random sequence is obtained by encrypting the original sequence. If a quantity of bits of the original sequence with the fixed length is different from the quantity of first preamble symbols, the first pseudo-random sequence is obtained by encrypting the original sequence.

Optionally, the transmit end may directly obtain a second pseudo-random sequence according to the symmetric encryption algorithm, and then encode the second pseudo-random sequence, to obtain the first pseudo-random sequence or the pseudo-random sequence. For a manner in which the transmit end obtains the second pseudo-random sequence, refer to the foregoing process of directly obtaining the first pseudo-random sequence or the pseudo-random sequence according to the symmetric encryption algorithm. Details are not described herein again in this embodiment of this application. When a quantity of bits of the obtained second pseudo-random sequence is the same as the quantity of first preamble symbols, the pseudo-random sequence is obtained by encoding the second pseudo-random sequence. When a quantity of bits of the obtained second pseudo-random sequence is different from the quantity of first preamble symbols, the first pseudo-random sequence is obtained by encoding the second pseudo-random sequence.

A manner of encoding the second pseudo-random sequence may include: performing negation operation on each value of the second pseudo-random sequence, setting a value at a fixed location in the second pseudo-random sequence to 0, setting a value at a fixed location in the second pseudo-random sequence to 1, and the like. An encoding manner is not limited in embodiments of this application. Encoding the second pseudo-random sequence can further enhance unpredictability of a finally obtained pseudo-random sequence, and then enhance an anti-interference capability of the spread CTS field, thereby improving accuracy of a determined CIR, and improving ranging and positioning performance.

The first preamble symbol may include a first preamble code or may be generated by spreading a first preamble code. The first preamble code is a sequence having a good correlation characteristic, for example, may be a binary sequence or a ternary sequence. The first preamble code is not limited in embodiments of this application. A sequence having a good correlation characteristic is not easily interfered with by an external signal, so that when the receive end subsequently determines the channel impulse response based on the CTS field, high precision of the channel impulse response can be maintained, thereby maintaining high-precision ranging of the ultra-wideband system. In addition, when the first preamble symbol is generated by spreading the first preamble code, the first preamble symbol may not be easily interfered with by an external signal and may be unpredictable, thereby improving an anti-interference capability and security of the ultra-wideband signal.

When the first preamble symbol is generated by spreading the first preamble code, the first preamble code may be multiplied by a spreading code, to obtain the first preamble symbol. A length of the spreading code is related to a length of the first preamble. In this embodiment of this application, a quantity of bits of the spreading code is the same as a quantity of bits of the first preamble code, values of the spreading code one-to-one correspond to values of the first preamble code, and each value in the first preamble code is multiplied by a corresponding value in the spreading code. The spreading code may be randomly generated by the transmit end, or may be selected from a plurality of prestored spreading codes. For example, the transmit end pre-generates a codebook (codebook) including a plurality of spreading codes, and the transmit end directly selects the spreading code from the codebook. A form, a length, an obtaining manner, and the like of the spreading code all may be configured in a customized manner. This is not limited in embodiments of this application.

In this embodiment of this application, a sequence obtained by spreading one first preamble symbol is referred to as one CTS symbol. When there are a plurality of first preamble symbols, a plurality of CTS symbols are obtained by spreading the plurality of first preamble symbols, the plurality of CTS symbols form a plurality of CTS segments (segments, Segs), and each CTS segment includes at least one CTS symbol. There is a gap between any two CTS segments, and no signal is transmitted in a time period corresponding to the gap. A time length of the gap may be configured in a customized manner. A specific value of the time length of the gap is not limited in embodiments of this application. When a quantity of CTS segments is greater than 2, there are a plurality of gaps, and the plurality of gaps may include gaps of a same time length, or may not include gaps of a same time length. In this way, when the ultra-wideband signal is sent through an impulse signal, a duty cycle of the impulse signal may be reduced, transmit power of the ultra-wideband signal is increased while a use specification of an ultra-wideband frequency band is met, and an attenuation degree of the ultra-wideband signal in a transmission process is reduced, to expand a coverage area of the ultra-wideband signal.

A length of the CTS field is determined based on a length of the CTS symbol, a quantity of CTS symbols, and the time length of the gap. The quantity of CTS symbols, a length of each CTS symbol, and the time length of the gap all may be set in a customized manner. A specific value of the quantity of CTS symbols, a specific value of the length of each CTS symbol, and a specific value of the time length of the gap are not limited in embodiments of this application.

A length of the SYNC field is determined based on a quantity of second preamble symbols and a length of each second preamble symbol. The quantity of second preamble symbols and the length of each second preamble symbol may be set in a customized manner. A specific value of the quantity of second preamble symbols and a specific value of the length of each second preamble symbol are not limited in embodiments of this application. The SYNC field and the CTS field may have a same preamble symbol, or may not have a same preamble symbol. When there are a plurality of second preamble symbols, the plurality of second preamble symbols may include a same second preamble symbol, or may not include a same second preamble symbol.

The second preamble symbol may include a second preamble code or may be generated by spreading a second preamble code. The second preamble code may be a sequence having a good correlation characteristic, for example, may be a binary sequence or a ternary sequence. A form of the second preamble code is not limited in embodiments of this application. For a spreading manner of the second preamble symbol, refer to that of the first preamble code. Details are not described herein again in this embodiment of this application.

A length of the entire ultra-wideband signal is determined based on the length of the SYNC field, a time length of a gap between the SYNC field and the CTS field, and the length of the CTS field. The ultra-wideband signal is used for subsequent ranging, the length of the ultra-wideband signal is related to a coverage area and a ranging frequency of the subsequent ranging, and both the length of the SYNC field and the time length of the gap between the SYNC field and the CTS field may be configured in a customized manner, so that the ultra-wideband signal can support requirements for a coverage area and a ranging frequency of ranging in different ranging scenarios. For example, when a coverage area of ranging needs to be increased, the length of the ultra-wideband signal may be increased.

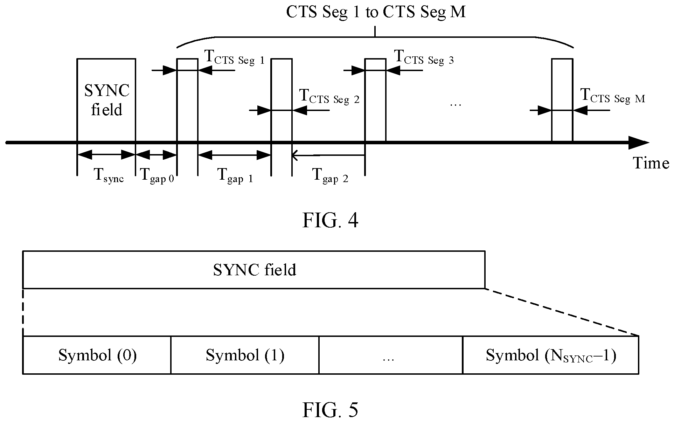

For example, FIG. 4 is a diagram of a format of an ultra-wideband signal according to an embodiment of this application. In FIG. 4, an example in which a CTS field includes M CTS segments: a CTS Seg 1 to a CTS Seg M is used for description. As shown in FIG. 4, T_{sync} represents a time length of a SYNC field in the ultra-wideband signal, and the SYNC field is transmitted in a time period of T_{sync}. T_{CTS Seg X} represents a time length of a CTS Seg X, and the CTS Seg X is transmitted in a time period of T_{CTS Seg X}, where 1≤X≤M.

T_{gap 0} represents a time length of a gap between the SYNC field and the 1^{st} CTS symbol (or CTS Seg 1) of the CTS field. There is a gap between every two CTS segments in the CTS field, there are a total of M-1 gaps in the CTS field, and T_{gap Y} represents a time length of a gap between a CTS Seg Y and a CTS Seg Y+1, where 1≤Y≤M-1. No signal is sent in time periods of Tᵢₙₜₑᵣᵥₐₗ, T_{gap 0}, and T_{gap Y}.

The following uses FIG. 5 to FIG. 7 as examples to describe a specific structure of a field in the ultra-wideband signal. FIG. 5 is a diagram of a structure of a SYNC field according to an embodiment of this application. As shown in FIG. 5, the SYNC field includes N_{SYNC} second preamble symbols: a symbol (0) to a symbol (N_{SYNC}-1), where N_{SYNC} is a positive integer greater than 2.

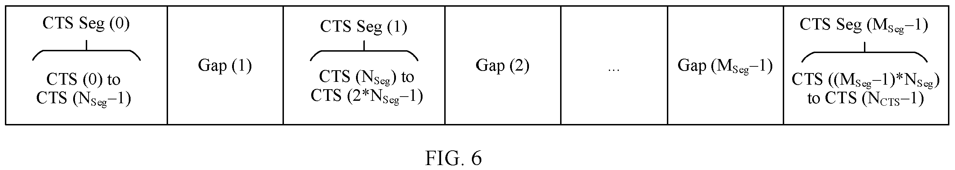

FIG. 6 is a diagram of a structure of a CTS field according to an embodiment of this application. As shown in FIG. 6, the CTS field includes N_{CTS} CTS symbols: a CTS (0) to a CTS (N_{CTS}-1), where N_{CTS} is a positive integer greater than 2. The N_{CTS} CTS symbols form M_{Seg} CTS segments: a CTS Seg (0) to a CTS Seg (M_{Seg}-1), and each CTS segment includes N_{Seg} CTS symbols, where M_{Seg} is a positive integer greater than 3, and N_{Seg} is a positive integer. For example, the CTS Seg (0) includes N_{Seg} CTS symbols: a CTS (0) to a CTS (N_{Seg}-1), the CTS Seg (1) includes N_{Seg} CTS symbols: a CTS (N_{Seg}) to a CTS (2*N_{Seg}-1), and the CTS Seg (M_{Seg}-1) includes N_{Seg} CTS symbols: a CTS ((M_{Seg}-1)*N_{Seg}) to a CTS (N_{CTS}-1). There is a gap between any two CTS segments. For example, there is a gap (1) between the CTS Seg (0) and the CTS Seg (1), there is a gap (2) between the CTS Seg (1) and the CTS Seg (2), and there is a gap (M_{Seg}-1) between the CTS Seg (M_{Seg}-2) and the CTS Seg (M_{Seg}-1).

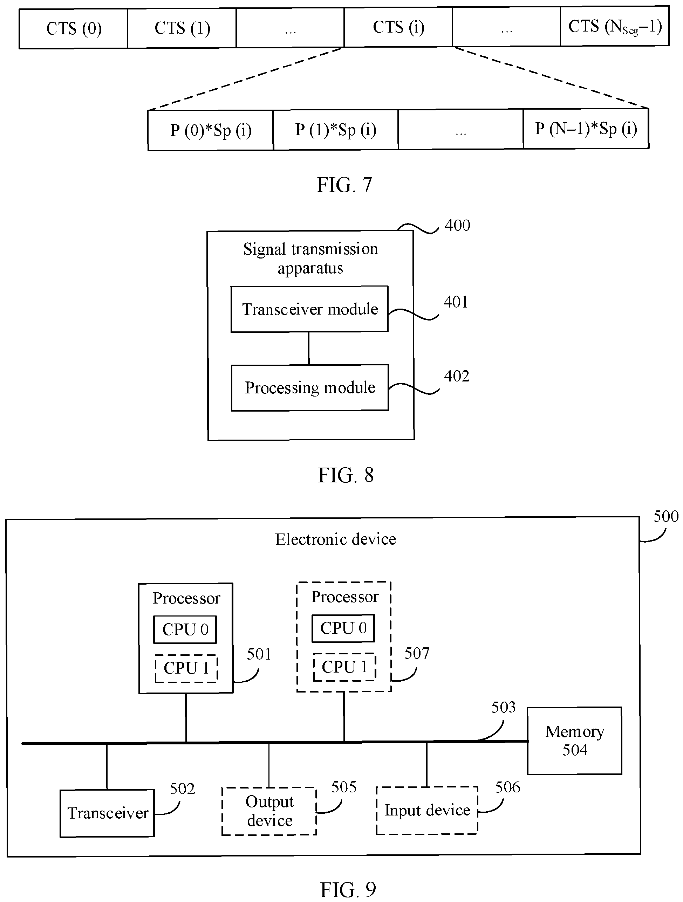

FIG. 7 is a diagram of a structure of a CTS segment according to an embodiment of this application. In FIG. 7, the CTS Seg (0) in FIG. 6 is used as an example for description. As shown in FIG. 7, the CTS Seg (0) includes the N_{Seg} CTS symbols: the CTS (0) to the CTS (N_{Seg-1}), and the N_{Seg} CTS symbols are obtained by multiplying the first N_{Seg} values in a pseudo-random sequence respectively by corresponding first preamble symbols. FIG. 7 shows a specific structure of a CTS (i) in the N_{Seg} CTS symbols. The CTS (i) is obtained by spreading a first preamble symbol based on the pseudo-random sequence, and each of values P (0) to P (N-1) in the first preamble symbol is multiplied by the i^{th} value S (i) in the pseudo-random sequence to obtain CTS (i).

Optionally, before the process 301 is performed, the transmit end may further send a narrowband signal to the receive end, where the narrowband signal is used to perform synchronization on the ultra-wideband signal. The narrowband signal may include a PPDU. There is a gap between the ultra-wideband signal and the narrowband signal. A time length of the gap may be set in a customized manner. A specific value of the time length of the gap is not limited in embodiments of this application. No signal is transmitted in a time period corresponding to the gap. A format (including a length, a field, and the like), an operating frequency band, a signal bandwidth, and the like of the narrowband signal are not limited in embodiments of this application.

302: The transmit end sends the ultra-wideband signal to the receive end.

303: The receive end determines first time-frequency synchronization information based on the SYNC field of the received ultra-wideband signal.

When the receive end fails to receive the narrowband signal, the receive end determines the first time-frequency synchronization information directly based on the SYNC field. When the receive end receives the narrowband signal, the receive end determines second time-frequency synchronization information based on the narrowband signal, and then determines the first time-frequency synchronization information based on the second time-frequency synchronization information and the SYNC field.

For a narrow band assisted ultra-wideband receive end, because an ultra-wideband system has a high bandwidth, a device needs to operate at a high sampling rate, that is, the ultra-wideband system needs to operate at a high frequency. Therefore, compared with a narrowband system, the ultra-wideband system has a large chip area, high operating power consumption, and high operating costs. In this embodiment of this application, the second time-frequency synchronization information is determined by a narrowband system at the receive end, and the narrowband system may partially perform a synchronization process based on the narrowband signal. This effectively shortens an air transmission time of the ultra-wideband signal and effectively reduces complexity of the ultra-wideband system, thereby reducing a chip area, operating power consumption, and operating costs of the ultra-wideband system, and improving ranging efficiency.

304: The receive end performs synchronization on the ultra-wideband signal based on the first time-frequency synchronization information.

The receive end may implement high-precision synchronization on the CTS field of the ultra-wideband signal based on the first time-frequency synchronization information.

When the ultra-wideband system determines a channel impulse response based on the CTS field, accuracy of the channel impulse response is closely related to precision of synchronization on the CTS field. The receive end can implement high-precision synchronization on the CTS field based on the SYNC field, to ensure accuracy of a subsequently determined channel impulse response, so as to ensure good ranging performance when ranging is performed based on the channel impulse response.

When the receive end determines first time-frequency synchronization based on the narrowband signal and the SYNC field, because different narrowband systems have different synchronization precision, the ultra-wideband system implements, based on the SYNC field, further synchronization based on synchronization of the narrowband system, so that the ultra-wideband system can flexibly adapt to synchronization precision of the different narrowband systems. This improves feasibility and wide application of the method in this embodiment of this application. In addition, due to limitations of a bandwidth and a clock frequency of the narrowband system, synchronization precision of the narrowband system is low. The receive end can further implement high-precision synchronization on the CTS field based on the SYNC field, thereby ensuring accuracy of a subsequently determined channel impulse response.

305: The receive end despreads the CTS field based on the pseudo-random sequence, to obtain the at least one first preamble symbol.

A pseudo-random sequence determined by the receive end is the same as the pseudo-random sequence determined by the transmit end. The pseudo-random sequence is determined by the receive end according to the symmetric encryption algorithm, that is, the receive end and the transmit end determine the pseudo-random sequence by using a same key. For a manner in which the receive end determines the pseudo-random sequence, refer to the process in which the transmit end determines the pseudo-random sequence in the foregoing process 301. Details are not described herein again in this embodiment of this application. It should be noted that, if both the receive end and the transmit end encrypt an original sequence according to the symmetric encryption algorithm to obtain the first pseudo-random sequence or the pseudo-random sequence, the original sequences used by the receive end and the transmit end are also the same.

306: The receive end determines a channel impulse response based on the at least one first preamble symbol.

In conclusion, according to the signal transmission method provided in this embodiment of this application, the transmit end generates the ultra-wideband signal, the ultra-wideband signal includes the CTS field, the CTS field is obtained by separately spreading the at least one first preamble symbol based on the pseudo-random sequence, then the transmit end sends the ultra-wideband signal to the receive end, the receive end determines the first time-frequency synchronization information based on the SYNC field of the received ultra-wideband signal, and performs synchronization on the ultra-wideband signal based on the first time-frequency synchronization information, and then the receive end despreads the CTS field based on the pseudo-random sequence, to obtain the at least one first preamble symbol, and determines the channel impulse response based on the at least one first preamble symbol, thereby implementing ranging. The CTS field is obtained by separately spreading the at least one first preamble symbol based on the pseudo-random sequence, the first preamble code is the sequence having the good correlation characteristic, and the pseudo-random sequence is equivalent to an encrypted spreading code. When the CTS field is despread based on the pseudo-random sequence, the pseudo-random sequence is equivalent to an encrypted despreading code. The at least one first preamble symbol is separately spread based on the encrypted spreading code, and the CTS field is despread based on the encrypted despreading code, so that the CTS field is not easily interfered with by an external signal and is unpredictable without damaging correlation of the first preamble symbol. This ensures a security protection capability of the ultra-wideband signal, thereby implementing secure high-precision ranging and positioning. In addition, encryption is combined with the at least one first preamble symbol, and no sequence used for encryption needs to be newly added, so that there is no need to additionally prolong an air transmission time of the ultra-wideband signal, thereby effectively improving ranging and positioning efficiency.

In addition, the receive end may implement high-precision synchronization on the CTS field of the ultra-wideband signal based on the SYNC field. Because accuracy of the channel impulse response is closely related to precision of synchronization on the CTS field, high-precision synchronization can be implemented based on the SYNC field, to improve the accuracy of the channel impulse response, thereby ensuring good ranging performance when ranging is performed based on the channel impulse response.

The length of the entire ultra-wideband signal is determined based on the length of the SYNC field, the time length of the gap between the SYNC field and the CTS field, and the length of the CTS field. The length of the ultra-wideband signal is related to the coverage area and the ranging frequency of the ranging, and both the length of the SYNC field and the time length of the gap between the SYNC field and the CTS field may be configured in a customized manner, so that the ultra-wideband signal can support requirements for the coverage area and the ranging frequency of the ranging in different ranging scenarios.

In addition, the signal transmission method provided in this embodiment of this application may be applied to a narrow band assisted ultra-wideband signal transmission system. Before sending the ultra-wideband signal to the receive end, the transmit end may first send the narrowband signal, and the receive end performs synchronization on the ultra-wideband signal based on the narrowband signal. In this way, the narrowband system may partially perform the synchronization process based on the narrowband signal. This effectively shortens the air transmission time of the ultra-wideband signal and effectively reduces the complexity of the ultra-wideband system, thereby reducing the chip area, operating power consumption, and operating costs of the ultra-wideband system, and improving the ranging efficiency while the ultra-wideband system is applied to maintain high-precision ranging. In the signal transmission system, because different narrowband systems have different synchronization precision, the ultra-wideband system implements, based on the SYNC field, further synchronization based on the synchronization of the narrowband system, so that the ultra-wideband system can flexibly adapt to the synchronization precision of the different narrowband systems. This improves the feasibility and wide application of the method in this embodiment of this application.

A sequence of the methods provided in embodiments of this application may be properly adjusted, or a process may be correspondingly added or deleted based on a situation. Any variation method readily figured out by a person skilled in the art within the technical scope disclosed in this application shall fall within the protection scope of this application. This is not limited in embodiments of this application.

The foregoing mainly describes the signal transmission methods provided in embodiments of this application from a perspective of interaction between devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is implemented by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

FIG. 8 is a block diagram of a signal transmission apparatus according to an embodiment of this application. When each functional module is obtained through division based on each corresponding function, a signal transmission apparatus 400 may include a transceiver module 401 and a processing module 402. For example, the signal transmission apparatus may be a transmit end or a receive end, or may be a chip in the signal transmission apparatus, or another combined component or component that has a function of the signal transmission apparatus. When the signal transmission apparatus 400 is a transmit end or a receive end, the transceiver module 401 may be a transceiver, and the transceiver may include an antenna, a radio frequency circuit, and the like; and the processing module 402 may be a processor (or a processing circuit), for example, a baseband processor, and the baseband processor may include one or more central processing units (central processing units, CPUs). When the signal transmission apparatus 400 is a component or a component having the foregoing functions, the transceiver module 401 may be a radio frequency unit, and the processing module 402 may be a processor (or a processing circuit), for example, a baseband processor. When the signal transmission apparatus 400 is a chip system, the transceiver module 401 may be an input/output interface of a chip (for example, a baseband chip), and the processing module 402 may be a processor (or a processing circuit) of the chip system, and may include one or more central processing units. It should be understood that, in this embodiment of this application, the transceiver module 401 may be implemented by the transceiver or a transceiver-related circuit component, and the processing module 402 may be implemented by the processor or a processor-related circuit component (or referred to as a processing circuit).

For example, when the signal transmission apparatus 400 is a chip or a functional unit of the transmit end, the transceiver module 401 may be configured to perform all receiving and sending operations performed by the transmit end in the embodiment shown in FIG. 1 or FIG. 3, and/or configured to support another process of the technology described in this specification, and the processing module 402 may be configured to perform all operations, other than the receiving and sending operations, performed by the transmit end in the embodiment shown in FIG. 1 or FIG. 3, and/or configured to support another process of the technology described in this specification.

The transceiver module 401 may include a sending module and/or a receiving module, respectively configured to perform sending and receiving operations performed by the transmit end in the embodiment shown in FIG. 1 or FIG. 3. The signal transmission apparatus includes:
a processing module, configured to generate an ultra-wideband signal, where the ultra-wideband signal includes a channel impulse response training sequence CTS field, and the CTS field is obtained by separately spreading at least one first preamble symbol based on a pseudo-random sequence; and
a transceiver module, configured to send the ultra-wideband signal, where the CTS field is used to determine a channel impulse response.

With reference to the foregoing solution, the pseudo-random sequence is determined according to a symmetric encryption algorithm.

With reference to the foregoing solution, the ultra-wideband signal further includes a synchronization SYNC field, the SYNC field includes at least one second preamble symbol, and the SYNC field is used to perform synchronization on the ultra-wideband signal.

With reference to the foregoing solution, there are a plurality of first preamble symbols, a plurality of CTS symbols are obtained by spreading the plurality of first preamble symbols, the plurality of CTS symbols form a plurality of CTS segments, and there is a gap between any two CTS segments.

With reference to the foregoing solution, the transceiver module is further configured to send a narrowband signal, where the narrowband signal is used to perform synchronization on the ultra-wideband signal.

For example, when the signal transmission apparatus 400 is a chip or a functional unit of the receive end, the transceiver module 401 may be configured to perform all receiving and sending operations performed by the receive end in the embodiment shown in FIG. 2 or FIG. 3, and/or configured to support another process of the technology described in this specification, and the processing module 402 may be configured to perform all operations, other than the receiving and sending operations, performed by the receive end in the embodiment shown in FIG. 2 or FIG. 3, and/or configured to support another process of the technology described in this specification.

The transceiver module 401 may include a sending module and/or a receiving module, respectively configured to perform sending and receiving operations performed by the receive end in the embodiment shown in FIG. 2 or FIG. 3. The signal transmission apparatus includes:
a transceiver module, configured to receive an ultra-wideband signal, where the ultra-wideband signal includes a channel impulse response training sequence CTS field, and the CTS field is obtained by separately spreading at least one first preamble symbol based on a pseudo-random sequence; and
a processing module, configured to despread the CTS field based on the pseudo-random sequence, to obtain the at least one first preamble symbol, where
the processing module is further configured to determine a channel impulse response based on the at least one first preamble symbol.

With reference to the foregoing solution, the pseudo-random sequence is determined according to a symmetric encryption algorithm.

With reference to the foregoing solution, the ultra-wideband signal further includes a synchronization SYNC field, and the SYNC field includes at least one second preamble symbol; and the processing module is further configured to: determine first time-frequency synchronization information based on the SYNC field; and perform synchronization on the ultra-wideband signal based on the first time-frequency synchronization information.

With reference to the foregoing solution, the CTS field includes a plurality of CTS segments, the CTS segment includes at least one CTS symbol, the first preamble symbol is obtained by despreading the CTS symbol, and there is a gap between any two CTS segments.

With reference to the foregoing solution, the processing module is further configured to: determine second time-frequency synchronization information based on a received narrowband signal; and perform synchronization on the ultra-wideband signal based on the second time-frequency synchronization information.

FIG. 9 is a diagram of a structure of an electronic device according to an embodiment of this application. An electronic device 600 may be a transmit end or a chip or a functional module in the transmit end, or may be a receive end or a chip or a functional module in the receive end. As shown in FIG. 9, the electronic device 500 includes a processor 501, a transceiver 502, and a communication line 503.

The processor 501 is configured to perform any step in the method embodiments shown in FIG. 1 to FIG. 3, and when performing processes such as sending an ultra-wideband signal, the processor 501 may choose to invoke the transceiver 502 and the communication line 503 to complete a corresponding operation.

Further, the electronic device 500 may further include a memory 504. The processor 501, the memory 504, and the transceiver 502 may be connected through the communication line 503.

The processor 501 is a processor, a general-purpose processor, a network processor (network processor, NP), a digital signal processor (digital signal processor, DSP), a microprocessor, a microcontroller, a programmable logic device (programmable logic device, PLD), or any combination thereof. The processor 501 may alternatively be another apparatus having a processing function, for example, a circuit, a component, or a software module. This is not limited.

The transceiver 502 is configured to communicate with another device or another communication network. The another communication network may be the Ethernet, a radio access network (radio access network, RAN), a wireless local area network (wireless local area network, WLAN), or the like. The transceiver 502 may be a module, a circuit, a transceiver, or any apparatus that can implement communication.

The transceiver 502 is mainly configured to send and receive a signal, and may include a transmitter and a receiver that respectively send and receive a signal. Operations other than signal sending and receiving are implemented by the processor, for example, information processing and calculation.

The communication line 503 is configured to transmit information between components included in the electronic device 500.

In a design, the processor may be considered as a logic circuit, and the transceiver may be considered as an interface circuit.

The memory 504 is configured to store instructions. The instructions may be a computer program.

The memory 504 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). The memory 504 may alternatively be a compact disc read-only memory (compact disc read-only memory, CD-ROM) or another optical disc storage, an optical disc storage (including a compact disc, a laser disc, an optical disc, a digital versatile disc, a Blu-ray disc, or the like), a magnetic disk storage medium, another magnetic storage device, or the like. It should be noted that the memory in the systems and methods described in this specification includes but is not limited to these memories and any memory of another proper type.

It should be noted that the memory 504 may be independent of the processor 501, or may be integrated with the processor 501. The memory 504 may be configured to store instructions, program code, some data, or the like. The memory 504 may be located inside the electronic device 500, or may be located outside the electronic device 500. This is not limited. The processor 501 is configured to execute the instructions stored in the memory 504, to implement the methods provided in the foregoing embodiments of this application.

In an example, the processor 501 may include one or more processors, for example, a CPU 0 and a CPU 1 in FIG. 9.

In an optional implementation, the electronic device 500 includes a plurality of processors. For example, in addition to the processor 501 in FIG. 9, the electronic device 500 may further include a processor 507.

In an optional implementation, the electronic device 500 further includes an output device 505 and an input device 506. For example, the input device 506 is a device, for example, a keyboard, a mouse, a microphone, or a joystick, and the output device 505 is a device, for example, a display or a speaker (speaker).

It should be noted that the electronic device 500 may be a chip system or a device having a structure similar to that in FIG. 9. The chip system may include a chip, or may include a chip and another discrete component. For actions, terms, and the like in embodiments of this application, refer to each other. This is not limited. In embodiments of this application, a name of a message exchanged between devices, a name of a parameter in a message, or the like is merely an example. Another name may alternatively be used during specific implementation. This is not limited. In addition, the composition structure shown in FIG. 9 does not constitute a limitation on the electronic device 500. In addition to the components shown in FIG. 9, the electronic device 500 may include more or fewer components than those shown in FIG. 9, or combine some of the components, or have different layouts of the components.

The processor and the transceiver described in this application may be implemented in an integrated circuit (integrated circuit, IC), an analog IC, a radio frequency integrated circuit, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

In still another possible implementation, the transceiver module 401 in FIG. 8 may be replaced with the transceiver 502 in FIG. 9, and a function of the transceiver module 401 may be integrated into the transceiver 502; and the processing module 402 may be replaced with the processor 507, and a function of the processing module 402 may be integrated into the processor 507. Further, the signal transmission apparatus 400 shown in FIG. 8 may further include a memory (not shown in the figure). When the transceiver module 401 is replaced with the transceiver 502, and the processing module 402 is replaced with the processor 507, the signal transmission apparatus 400 in this embodiment of this application may be the electronic device 500 shown in FIG. 9.

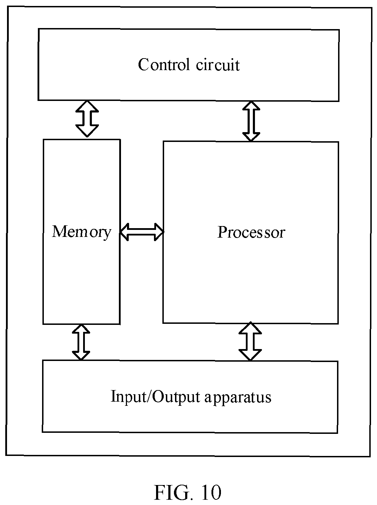

FIG. 10 is a diagram of a structure of a signal transmission apparatus according to an embodiment of this application. The signal transmission apparatus is applicable to the scenarios shown in the foregoing method embodiments. For ease of description, FIG. 10 shows only main components of the signal transmission apparatus, including a processor, a memory, a control circuit, and an input/output apparatus. The processor is mainly configured to: process a communication protocol and communication data, execute a software program, and process data of the software program. The memory is mainly configured to store the software program and the data. The control circuit is mainly configured to supply power and transmit various electrical signals. The input/output apparatus is mainly configured to receive data input by a user and output data to the user.

When the signal transmission apparatus is a transmit end or a receive end, the control circuit may be a main board; the memory includes a medium having a storage function, such as a hard disk, a RAM, or a ROM; the processor may include a baseband processor and a central processing unit, the baseband processor is mainly configured to process a communication protocol and communication data, and the central processing unit is mainly configured to: control the entire signal transmission apparatus, execute a software program, and process data of the software program; and the input/output apparatus includes a display, a keyboard, a mouse, and the like. The control circuit may further include or be connected to a transceiver circuit or a transceiver, for example, a network cable interface, and is configured to send or receive data or a signal, for example, perform data transmission and communication with another device. Further, the control circuit may further include an antenna, configured to receive and send a radio signal, and configured to perform data/signal transmission with another device.

According to the methods provided in embodiments of this application, this application further provides a computer program product. The computer program product includes computer program code, and when the computer program code is run on a computer, the computer is enabled to perform the method according to any one of embodiments of this application.

An embodiment of this application further provides a computer-readable storage medium. All or some of the procedures in the foregoing method embodiments may be implemented by a computer or an apparatus having an information processing capability by executing a computer program or instructions, to control related hardware. The computer program or the group of instructions may be stored in the foregoing computer-readable storage medium. When the computer program or the group of instructions are executed, the procedures of the foregoing method embodiments may be performed. The computer-readable storage medium may be an internal storage unit of the transmit end or the receive end in any one of the foregoing embodiments, for example, a hard disk or a memory of the transmit end or the receive end. The computer-readable storage medium may alternatively be an external storage device of the transmit end or the receive end, for example, a plug-in hard disk, a smart media card (smart media card, SMC), a secure digital (secure digital, SD) card, or a flash card (flash card), configured for the transmit end or the receive end. Further, the computer-readable storage medium may include both the internal storage unit and the external storage device of the transmit end or the receive end. The computer-readable storage medium is configured to store the computer program or the instructions and another program and data that are required by the transmit end or the receive end. The computer-readable storage medium may be further configured to temporarily store data that has been output or is to be output.

A person of ordinary skill in the art may be aware that units and algorithm steps in the examples described with reference to embodiments disclosed in this specification may be implemented by electronic hardware or a combination of computer software and electronic hardware. Whether the functions are implemented by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate, and components displayed as units may or may not be physical units. To be specific, the components may be located at one location, or may be distributed on a plurality of network units. A part or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, wherein the method comprises:
generating an ultra-wideband signal, wherein the ultra-wideband signal comprises a channel impulse response training sequence CTS field, and the CTS field is obtained by separately spreading at least one first preamble symbol based on a pseudo-random sequence; and
sending the ultra-wideband signal, wherein the CTS field is used to determine a channel impulse response.

2. The method according to claim 1, wherein the pseudo-random sequence is determined according to a symmetric encryption algorithm.

3. The method according to claim 1 or 2, wherein the ultra-wideband signal further comprises a synchronization SYNC field, the SYNC field comprises at least one second preamble symbol, and the SYNC field is used to perform synchronization on the ultra-wideband signal.

4. The method according to any one of claims 1 to 3, wherein there are a plurality of first preamble symbols, a plurality of CTS symbols are obtained by spreading the plurality of first preamble symbols, the plurality of CTS symbols form a plurality of CTS segments, and there is a gap between any two CTS segments.

5. The method according to any one of claims 1 to 4, wherein the method further comprises:
sending a narrowband signal, wherein the narrowband signal is used to perform synchronization on the ultra-wideband signal.

6. A signal transmission method, wherein the method comprises:
receiving an ultra-wideband signal, wherein the ultra-wideband signal comprises a channel impulse response training sequence CTS field, and the CTS field is obtained by separately spreading at least one first preamble symbol based on a pseudo-random sequence;
despreading the CTS field based on the pseudo-random sequence, to obtain the at least one first preamble symbol; and
determining a channel impulse response based on the at least one first preamble symbol.

7. The method according to claim 6, wherein the pseudo-random sequence is determined according to a symmetric encryption algorithm.

8. The method according to claim 6 or 7, wherein the ultra-wideband signal further comprises a synchronization SYNC field, and the SYNC field comprises at least one second preamble symbol; and the method further comprises:
determining first time-frequency synchronization information based on the SYNC field; and
performing synchronization on the ultra-wideband signal based on the first time-frequency synchronization information.

9. The method according to any one of claims 6 to 8, wherein the CTS field comprises a plurality of CTS segments, the CTS segment comprises at least one CTS symbol, the first preamble symbol is obtained by despreading the CTS symbol, and there is a gap between any two CTS segments.

10. The method according to any one of claims 6 to 9, wherein the method further comprises:
determining second time-frequency synchronization information based on a received narrowband signal; and
performing synchronization on the ultra-wideband signal based on the second time-frequency synchronization information.

11. A signal transmission apparatus, wherein the apparatus comprises:
a processing module, configured to generate an ultra-wideband signal, wherein the ultra-wideband signal comprises a channel impulse response training sequence CTS field, and the CTS field is obtained by separately spreading at least one first preamble symbol based on a pseudo-random sequence; and
a transceiver module, configured to send the ultra-wideband signal, wherein the CTS field is used to determine a channel impulse response.

12. A signal transmission apparatus, wherein the apparatus comprises:
a transceiver module, configured to receive an ultra-wideband signal, wherein the ultra-wideband signal comprises a channel impulse response training sequence CTS field, and the CTS field is obtained by separately spreading at least one first preamble symbol based on a pseudo-random sequence; and
a processing module, configured to despread the CTS field based on the pseudo-random sequence, to obtain the at least one first preamble symbol, wherein
the processing module is further configured to determine a channel impulse response based on the at least one first preamble symbol.

13. A signal transmission apparatus, wherein the apparatus comprises:
one or more processors; and
a memory, configured to store one or more computer programs or instructions, wherein
when the one or more computer programs or instructions are executed by the one or more processors, the one or more processors are enabled to implement the method according to any one of claims 1 to 5.

14. A signal transmission apparatus, wherein the apparatus comprises:
one or more processors; and
a memory, configured to store one or more computer programs or instructions, wherein
when the one or more computer programs or instructions are executed by the one or more processors, the one or more processors are enabled to implement the method according to any one of claims 6 to 10.

15. A signal transmission system, wherein the system comprises a transmit end and a receive end, wherein
the transmit end comprises the signal transmission apparatus according to claim **11** or the signal transmission apparatus according to claim 13, and the receive end comprises the signal transmission apparatus according to claim 12 or the signal transmission apparatus according to claim 14.
